# NEUE EUROPÄISCHE PATENTSCHRIFT

(11) **EP 0 867 706 B2**
(45) Veröffentlichungstag und Bekanntmachung des Hinweises auf die Entscheidung über den Einspruch: **28.02.2007**
(45) Hinweis auf die Patenterteilung: 13.02.2002
(21) Anmeldenummer: 98103943.1
(22) Anmeldetag: 05.03.1998
(51) Int. Cl.: G01M 1/06, G01M 1/04

(54) **Verfahren und Vorrichtung zum Festspannen eines Kraftfahrzeugrades auf eine Hauptwelle einer Auswuchtmaschine**
Method and device for fixing a vehicle wheel on a main shaft of a balancing machine
Méthode et dispositif pour fixer une roue de véhicule sur l'arbre principale d'une machine d'équilibrage

(30) Priorität: 27.03.1997 DE 19713075
(43) Veröffentlichungstag der Anmeldung: 30.09.1998
(73) Patentinhaber: Snap-on Equipment GmbH, 64319 Pfungstadt (DE)
(72) Erfinder: Rossteuscher, Gerhard, K8N 4Z2 Belleville, Ontario (CA)
(74) Vertreter: Nöth, Heinz

(56) Entgegenhaltungen:
- EP-A- 0 306 668
- EP-A- 0 877 920
- DE-A- 2 705 023
- DE-A- 3 923 191
- DE-A- 4 200 380
- DE-A- 4 323 549
- Firmenprospekt der Firma Hofmann Werkstatt-Technik GmbH, Pfungstadt, geodyna 5001, geodyna 5501, Impressum 950211406.98

## Beschreibung

Die Erfindung betrifft ein Verfahren und eine Vorrichtung zum Festspannen eines Kraftfahrzeugrades auf eine Hauptwelle einer Auswuchtmaschine nach dem Oberbegriff des Patentanspruches 1 bzw. des Patentanspruches 4.

Es ist bekannt, mit Hilfe von Zentrier- und Spannmitteln (Firmenprospekt der Firma Hofmann Werkstatt-Technik GmbH, Pfungstadt "Zentrier- und Spannmittel", Impressum 9402192 02.96) Kraftfahrzeugräder auf der Hauptwette einer Radauswuchtmaschine lösbar für die Durchführung eines Unwuchtausgleichs zu befestigen. Bei mittenlochzentrierten Rädem erfolgt die Aufspannung mit Hilfe einer Mittenzentriervorrichtung. Hierbei wird die Zentrierung über einen oder mehrere Zentrierkonen, Konusringe oder spezielle Zentrierringe vorgenommen. Bei bolzenzentrierten Rädern werden in die Bolzenlöcher des Kraftfahrzeugrades konisch geformte Zentrierbolzen gedrückt. Es kann auch über das Mittenloch des Kraftfahrzeugrades eine Zentrierung stattfinden und damit die Bolzenzentrierung kombiniert werden. Das Festspannen erfolgt mit Hilfe einer Andrück-bzw. Spannmutter, die mit der Hauptwelle der Radauswuchtmaschine in Gewindeeingriff steht. Die Spannmutter wird mit Hilfe eines Flügel- oder Handrades oder ähnlicher handbetätigbarer Mittel gegenüber der feststehenden Hauptwelle verdreht, so daß aufgrund der dabei entstehenden axialen Bewegung der Andrück- bzw. Spannmutter die Zentrierkonen zur Mittenzentrierung und/oder Bolzenzentrierung zur Wirkung kommen. Beim Lösen wird die Andrück- bzw. Spannmutter in der entgegengesetzten Richtung von Hand gedreht.

Aus der DE 39 23 191 A ist eine Radauswuchtmaschine bekannt, welche ein selbsthemmendes Reduktionsgetriebe aufweist, um auf die Hauptwelle eine Haltekraft auszuüben, wenn das Kraftfahrzeugrad an der Hauptwelle festgespannt wird.

Aus der EP-A-0 306 668 ist eine Radauswuchtmaschine bekannt, bei welcher mit Hilfe einer auf die Hauptwelle aufgesetzten Spannmutter das Kraftfahrzeugrad auf einen an der Hauptwelle befindlichen Zentrierkonus gespannt wird. Hierzu ist es erforderlich, die Hauptwelle festzuhalten, damit die Spannmutter festgezogen werden kann.

Aus der DE 43 23 549 A ist eine Maschine bekannt, die sowohl zum Reifenwechseln als auch zum Auswuchten eines Kraftfahrzeugrades dient. Das Rad wird mit Hilfe eines Niederhaltekegels an der Hauptwelle festgezogen. Bei der Unwuchtmessung wird die Hauptwelle mit Hilfe einer Handkurbel angetrieben.

Ferner ist es aus der DE 42 00 380 C2 bekannt, mit Hilfe einer vom Motor der Auswuchtmaschine angetriebenen Spannmutter, welche drehbar an der Hauptwelle gelagert ist, und über eine durch die Hauptwelle geführte Zugstange, mit welcher die Spannmutter in Gewindeeingriff steht, eine Mittenlochzentrierung des Kraftfahrzeugrades an der Hauptwelle durchzuführen.

Aufgabe der Erfindung ist es, ein Verfahren und eine Vorrichtung der eingangs genannten Art zu schaffen, mit welchen ohne großen zusätzlichen Aufwand das zentrierte Aufspannen des Kraftfahrzeugrades auf der Hauptwelle der Auswuchtmaschine für die Serviceperson erleichtert wird.

Diese Aufgabe wird beim Verfahren erfindungsgemäß durch das Kennzeichen des Anspruches 1 und bei der Vorrichtung durch das Kennzeichen des Patentanspruches 4, gelöst.

Bei der Erfindung wird zum axialen Verschieben der Spannmutter die Hauptwelle durch ihren Motorantrieb gedreht und die Spannmutter gegen Drehung festgehalten. Die für das Spannen erforderliche Kraft wird daher von dem Motorantrieb geliefert, der auch zum Antreiben der Hauptwelle für den Unwuchtmeßlauf dient. Die Spannmutter bzw. das mit der Spannmutter verbundene Flügel- oder Handrad kann von Hand durch die Bedienungsperson festgehalten werden. Es kann jedoch auch eine am Maschinenrahmen abgestützte Haltevorrichtung zum Festhalten der Spannmutter gegen Drehung verwendet werden.

Beim Festspannen des Kraftfahrzeugrades mit Hilfe des Motorantriebs wird das vom Motorantrieb erzeugte Drehmoment überwacht, und der Motorantrieb wird dann abgeschattet, wenn dieses Drehmoment einen bestimmten Wert erreicht. Durch diesen Drehmomentwert ist gewährleistet, daß das Kraftfahrzeugrad ausreichend fest für die Durchführung des Unwuchtmeßlaufes aufgespannt ist. Zum Lösen des Kraftfahrzeugrades wird die Spannmutter wiederum gegen Drehung festgehalten, und die Hauptwelle wird durch den Motorantrieb in entgegengesetzter Richtung angetrieben. Hierbei wird der Motorantrieb dann abgeschaltet, wenn das vermittelle Drehmoment auf einen bestimmten Wert abgesunken ist. Hierdurch wird gewährleistet, daß die Spannmutter mühelos von der Hauptwelle zum Freigeben des Kraftfahrzeugrades gelöst werden kann.

Anhand der Figuren wird die Erfindung noch näher erläutert. Es zeigt:
- Fig. 1:: in schematischer Darstellung eine Hauptwelle einer Auswuchtmaschine, welche von einem Antriebsmotor angetrieben wird sowie im Blockschaltbild eine Steuereinrichtung zum Ein- und Ausschalten des Antriebsmotors beim Spannen und Lösen der Zentrier- und Spannmittel; und
- Fig. 2 (A) bis (C):: verschiedene Ausführungsformen für Zentrier- und Spannmittel.

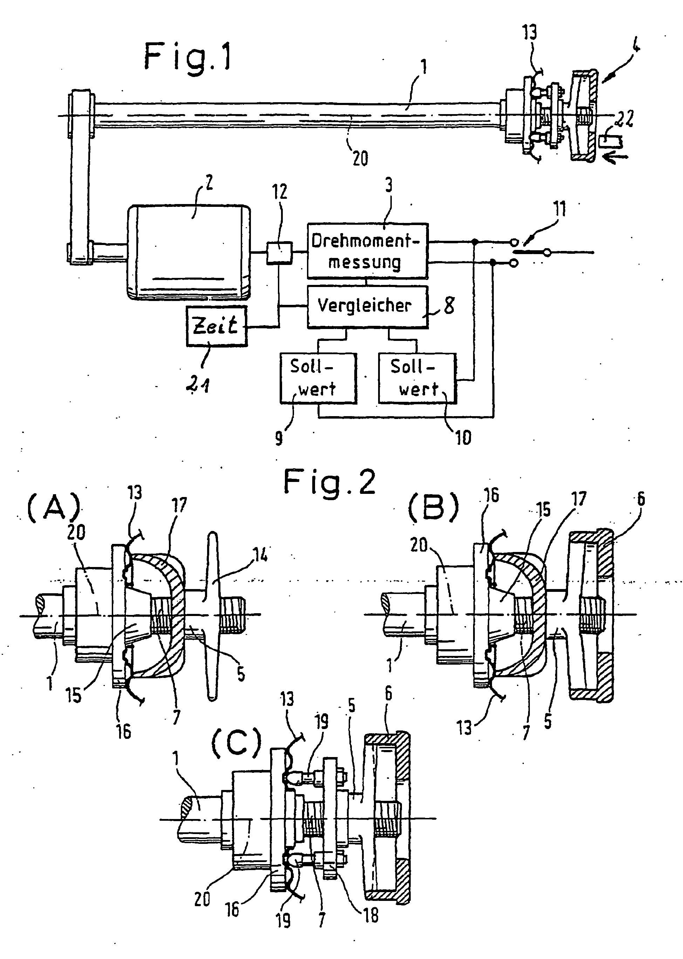

In der Fig. 1 ist eine Hauptwelle 1 einer Auswuchtmaschine dargestellt. Am vorderen Ende der Hauptwelle ist mit Hilfe von Zentrier- und Spannmitteln (Spanneinrichtung 4) ein Kraftfahrzeugrad 13 auf die Hauptwelle aufgespannt. Zum Antrieb der Hauptwelle 1 mit dem aufgespannten Kraftfahrzeugrad 13 beim Meßlauf dient ein Antriebsmotor 2, der als Elektromotor ausgebildet ist und insbesondere ein Kondensatormotor (EP 0 524 465 B1) ist oder anderer geeigneter Wechselstrommotor ist, der auch als Gegenstrombremse einsetzbar ist.

Dieser Antriebsmotor 2 wird ferner verwendet, um die Kraft- bzw. das Drehmoment zu liefern, mit welchem das Kraftfahrzeugrad 13 an der Hauptwelle befestigt wird und nach Durchführung des Unwuchtmeßvorgangs und Unwuchtausgleichs aus dein festgespannten Zustand wieder gelöst wird.

Die Spanneinrichtung 4 kann in bekannter Weise ausgebildet sein. Mögliche Ausführungsformen sind in der Fig. 2 in den Darstellungen (A), (B) und (C) gezeigt. Bei den Ausführungsformen (A) und (B) erfolgt eine Mittenlochzentrierung des Kraftfahrzeugrades 13 mit Hilfe eines auf die Hauptwelle 1 aufgesetzten Zentrierkonus 15. Beim Festspannen Ist das Mittenloch des Kraftfahrzeugrades 13 auf diesen Zentrierkonus 15 geschoben. Mit Hilfe einer Spannmutter 5, an die ein Flügelrad 14 bei der Ausführungsform (A) und ein Handrad 6 bei der Ausführungsform in der Darstellung (B) angeformt Ist, wird das Rad 13 gegen einen Flansch 16 angedrückt. Die Spannmutter 5 steht in Gewindeeingriff mit einem Gewinde 7, das drehfest mit der Aufspannwelle 1 verbunden ist. Zwischen der Aufspannmutter und dem Kraftfahrzeugrad 13 kann ein Drucktopf 17 zur Aufnahme der Radspannung vorgesehen sein.

Bei der Ausführungsform der Fig. 2 (C) ist zwischen die Spannmutter 5 und das Kraftfahrzeugrad 13 ein Wechselflansch 18 mit Zentrierbolzen 19 geschaltet Die Zentrierbolzen greifen mit konisch geformten vorderen Enden in die Bolzenlöcher des Kraftfahrzeugrades ein. In bekannter Weise können die Zentrierbolzen 19 am Wechselflansch 18 auf verschiedene Radien gebracht werden oder ausgewechselt werden.

Bei der Erfindung wird beim Aufspannen des Rades 13 auf die Hauptwelle 1 die Hauptwelle 1 und das damit drehfest verbundene Gewinde 7 gedreht, während die Spannmutter 5 gegen Drehung, beispielsweise am Handrad 6 oder am Flügelrad 14 festgehalten wird. Das Festhalten kann von Hand geschehen oder mit Hilfe einer am nicht näher dargestellten Maschinenrahmen abgestützten Halteelnrichtung 22, welche mit der Spanneinrichtung 4 in Eingriff (Fig. 1) gebracht werden kann. Aufgrund der Drehung des Gewindes 7 wird die gegen Drehung festgehaltene Spannmutter 5 beim Festspannen In den Darstellungen der Fig. 2 nach links verschoben, so daß das Kraftfahrzeugrad 13 an den jeweiligen Flanschen 16 festgedrückt wird. Durch die Wirkung der Zentrierkonen am Zentrierkonus bzw. an den Zentrierbolzen 19 erfolgt eine Mittenzentrierung des Kraftfahrzeugrades gegenüber der Wellenachse 20.

Für den Antrieb der Hauptwelle 1 sorgt der Antriebsmotor 2, welcher mit Hilfe eines Hauptschalters 11 oder anderen Schalters, der mittels eines Pedals betätigt wird, eingeschaltet wird. Der Hauptschalter oder der mit Pedal betätigte Schalter kann als Kippschalter ausgebildet sein, so daß der Antriebsmotor 2 und damit die Hauptwelle 1 In entgegengesetzten Richtungen angetrieben werden können. Für das Spannen wird der Antriebsmotor 2 in der Weise angetrieben, daß aufgrund der Gewindedrehung 7, wie schon erläutert, die Spannmutter 5 in der Fig. 2 nach links bewegt wird. Während des Spannens wird zur Drehmomentmessung der vom Motor gezogene Strom gemessen. Hierzu ist eine entsprechende Drehmomentmeßeinrichtung 3, welche als Meßeinrichtung zur Messung des Versorgungsstromes ausgebildet sein kann, vorgesehen. Mit der Drehmomentmeßeinrichtung 3 ist ein Vergleicher 8 verbunden. An den Vergleicher 8 ist femer ein Drehmomentsollwertgeber, beispielsweise in Form eines Speichers, ebenfalls verbunden. Im Sollwertspeicher 9 ist der Drehmomentwert hinterlegt, welcher beim Spannen nicht überschritten werden soll. Sobald dieser Wert erreicht wird, liefert der Vergleicher 8 ein Signal an einen Schalter 12, welcher die Stromzufuhr zum Antriebsmotor 2 abschaltet. Der Im Speicher 9 hinterlegte Drehmomentsollwert ist so bemessen, daß das Kraftfahrzeugrad 13 mit ausreichender Spannkraft auf die Hauptwelle t mit Hilfe der in der Fig. 2 dargestellten Spanneinrichtungen aufgespannt ist. Der Sollwertspeicher 9 wird beim Einschalten des Antriebsmotors 2 in der für das Spannen vorgesehenen Drehrichtung aktiviert.

Beim Lösen der Spanneinrichtung 4 wird der Hauptschalter 11 bzw. der mit dem Pedal betätigte Schalter (Kippschalter) in die andere Richtung betätigt, so daß die Hauptwelle 1 in entgegengesetzter Richtung angetrieben wird, wobei die Spannmutter 5 wiederum gegen Verdrehen festgehalten wird. Gleichzeitig wird ein Sollwertspeicher 10 aktiviert, in welchem ein Sollwertfür das Drehmoment abgelegt ist, bei welchem die Abschaltung des Versorgungsstromes beim Lösen mit Hilfe des Antriebsmotors 2 erfolgen soll. Sobald beim Lösen das Drehmoment auf diesen Wert abgesunken ist, liefert der Vergleicher 8 wiederum das entsprechende Aus-Signal an den Schalter 12. Die Spannmutter 5 ist dann soweitgelöst, daß sievon Hand In einfacher Weise zum endgültigen Entfernen des Kraftfahrzeugrades 13 vom Gewinde durch Drehen von Hand von der Serviceperson entfemt werden kann.

Femer kann eine Sicherheitseinrichtung vorgesehen sein, welche den Motor auch dann ausschaltet, wenn die Spanneinrichtung4 nicht festgehalten wird. Hierzu kann ein Zeitgeber 21 vorgesehen sein, welcher ein bestimmtes mit dem Einschalten des Antriebsmotors 2 beginnendes Zeitintervall vorgibt. Dieses Zeitintervall entspricht zumindest dem Zeitintervall, welches erforderlich ist, um bei festgehaltener Spanneinrichtung 4 das auszuwuchtende Rad mit dem erforderlichen Solldrehmoment festzuspannen. Wenn das vom Zeitgeber21 vorgegebene Zeitintervall abgelaufen ist und das Solldrehmoment nicht erreicht wurde, wird ein Signal, beispielsweise vom Zeitgeber 21, erzeugt, durch welches der Antriebsmotor 2 abgeschaltet wird. Hierzu kann der Zeitgeber 21 mit dem Schalter 12 verbunden sein. Diese vom Zeitgeber 21 bewirkte Abschaltung erfolgt in Übereinstimmung mit der Wirkungsweise des Vergleichers 8. Wenn vom Vergleicher 8 Innerhalb des vorgegebenen Zeitintervalls keine Abschaltung bewirkt wird, wird diese vom Zeitgeber 21, wie erläutert, verursacht.

Um die Sicherheitseinrichtung zu erreichen, kann auch eine Drehzahlüberwachung der Drehzahl der Hauptwelle 1 durchgeführt werden. Wenn der zeitliche Verlauf der ermittelten Drehzahl nicht dem Drehzahlverlauf entspricht, der bei einem ordnungsgemäßen Spannvorgang vorhanden ist, wird ebenfalls nach einem bestimmten Zeitablauf der Antriebsmotor 2 abgeschaltet.

## Patentansprüche

1. Verfahren zum lösbaren Befestigen eines Kraftfahrzeugrades (13) auf eine Hauptwelle (1) einer Radauswuchtmaschine, bei dem ein am Rad vorgesehenes Mittenloch und/oder am Rad (13) vorgesehene Bolzenlöcher mit Hilfe einer durch Gewindeeingriff auf der Hauptwelle in axialer Richtung verschiebbaren Spannmutter (5) auf einen oder mehrere bezüglich der Hauptwellenachse (20) definiert angeordnete Zentrierkonen (15; 19) aufgespannt oder von diesen gelöst wird bzw. werden, **dadurch gekennzeichnet, dass** zum axialen Verschieben der Spannmutter (5) die Hauptwelle (1) durch den Motorantrieb (2) der Hauptwelle (1) der Auswuchtmaschine gedreht und die Spannmutter (5) gegen Drehung festgehalten wird und
daß beim Erreichen eines solchen vom Motorantrieb gegen die festgehaltene Spannmutter (5) erzeugten Drehmoments, das das Kraftfahrzeugrad ausreichend fest für die Durchführung des Unwuchtmeßlaufs auf der Hauptwelle aufspannt, während des Spannvorganges der Motorantrieb (2) automatisch abgeschaltet wird.

2. Verfahren nach Anspruch 1, **dadurch gekennzeichnet, daß** der Motorantrieb (2) abgeschaltet wird, wenn innerhalb eines bestimmten Zeitintervalls nach dem Einschalten des Motorantriebs (2) das vom Motorantrieb erzeugte Drehmoment unterhalb eines Solldrehmomentes bleibt.

3. Verfahren nach Anspruch 1 oder 2, d**adurch gekennzeichnet, daß** das vom Motorantrieb (2) gegen die festgehaltene Spannmutter (5) erzeugte Drehmoment mit einem Sollwertdrehmoment verglichen wird.

4. Vorrichtung zum lösbaren Befestigen eines Kraftfahrzeugrades (13) auf einer von einem Antriebsmotor (2) antreibbaren Hauptwelle (1) einer Auswuchtmaschine mit einem oder mehreren bezüglich der Hauptwellenachse (20) definiert angeordneten Zentrierkonen (15; 19) und einer Spannmutter (5), die durch Gewindeeingriff mit der Hauptwelle (1) in axialer Richtung bewegbar ist, wobei ein am Rad (13) vorgesehenes Mittenloch und/oder am Rad (13) vorgesehene Bolzenlöcher auf den Zentrierkonus bzw. die Zentrierkonen (15; 19) gespannt oder von diesem bzw. diesen gelöst wird bzw. werden, **dadurch gekennzeichnet, dass** an der Spannmutter (5) eine Einrichtung (6; 14) zum Festhalten der Spannmutter (5) von Hand oder durch eine am Maschinenrahmen abstützbare Haltevorrichtung (22) gegen Drehung vorgesehen ist und eine Schalteinrichtung (11, 12) des Antriebsmotors (2) der Hauptwelle (1) so ausgebildet ist und der Antriebsmotor (2) mit der Hauptwelle (1) so verbunden ist, dass beim Spannen des Kraftfahrzeugrades (13) auf den Zentrierkonus bzw. die Zentrierkonen (15; 19) der Antriebsmotor (2) zum Drehen der Hauptwelle (1) und axialen Verschieben der gegen Drehen festgehaltene Spannmutter (5) einschaltbar ist, und
daß die Schalteinrichtung (11, 12) einen Schalter (*2) zum automatischen Abschalten des beim Spannen des Kraftfahrzeugrades (13) auf den Zentrierkonus bzw. die Zentrierkonen (15; 19) eingeschalteten Antriebsmotors (2) beim Erreichen eines solchen Drehmoments enthält, das das Kraftfahrzeugrad ausreichend fest für die Durchführung des Unwuchtmeßlaufs auf der Hauptwelle aufspannt.

5. Vorrichtung nach Anspruch 4, **dadurch gekennzeichnet, daß** zum Lösen des Rades (13) die vom Antriebsmotor (2) angetriebene Hauptwelle (1) eine zum Spannen entgegengesetzte Drehrichtung bei gegen Drehung festgelegter Spannmutter (5) aufweist.

6. Vorrichtung nach Anspruch 4 oder 5, **dadurch gekennzeichnet, daß** ein mit dem Einschalten des Antriebsmotors (2) aktivierter Sollwertspeicher (9, 10) für ein Sollwertdrehmoment mit einem Vergleicher (8) zum Vergleich mit dem vom Antriebsmotor (2) gegen die festgehaltene Spannmutter (5) erzeugte Drehmoment verbunden ist.

7. Vorrichtung nach einem der Ansprüche 4 bis 6, **dadurch gekennzeichnet, daß** ein Zeitgeber (21), welcher ein Zeitintervall vorgibt, innerhalb welchem das vom Antriebsmotor (2) erzeugte Solldrehmoment gegen die festgehaltene Spannmutter (5) erreicht wird, mit dem Schalter (12) zum automatischen Abschalten des Antriebsmotors (2) verbunden ist.

## Claims

1. A method of releasably fixing a motor vehicle wheel (13) on a main shaft (1) of a wheel balancing machine, in which a central hole provided on the wheel and/or bolt holes provided on the wheel (13) is or are clamped on to or released from one or more centering cones (15; 19) arranged in defined relationship with respect to the axis (20) of the main shaft by means of a clamping nut (5) which is displaceable on the main shaft in the axial direction by screwthreaded engagement, **characterised in that** for axial displacement of the clamping nut (5) the main shaft (1) is rotated by the motor drive (2) of the main shaft (1) of the balancing machine and the clamping nut (5) is held fast to prevent rotation thereof and upon the attainment of such a torque produced by the motor drive against the held-fast clamping nut (5), that it clamps the motor vehicle wheel on the main shaft sufficiently fast for carrying out the unbalance measuring run, during the clamping operation the motor drive (2) is automatically switched off.

2. A method according to claim 1 **characterised in that** the motor drive (2) is switched off if the torque produced by the motor drive remains below a reference torque within a given period of time after the motor drive (2) is switched on.

3. A method according to claim 1 or claim 2 **characterised in that** the torque produced by the motor drive (2) against the clamping nut (5) which is held fast is compared to a reference torque.

4. Apparatus for releasably fixing a motor vehicle wheel (13) on a main shaft (1) of a balancing machine, which shaft is drivable by a drive motor (2), comprising one or more centering cones (15; 19) which are arranged in defined relationship with respect to the axis (20) of the main shaft and a clamping nut (5) which is movable in the axial direction by screwthreaded engagement with the main shaft (1), wherein a central hole provided on the wheel (13) and/or bolt holes provided on the wheel (13) is or are clamped on to or released from the centering cone or cones (15; 19), **characterised in that** provided on the clamping nut (5) is a device (6; 14) for holding the clamping nut (5) fast to prevent rotation thereof by hand or by a holding device (22) which can be supported against the machine frame, and a switching device (11, 12) of the drive motor (2) of the main shaft (1) is so designed and the drive motor (2) is so connected to the main shaft (1) that when the motor vehicle wheel (13) is clamped on to the centering cone or cones (15; 19) the drive motor (2) can be switched on to rotate the main shaft (1) and axially displace the clamping nut (5) which is held fast to prevent rotation thereof and the switching device (11, 12) includes a switch (12) for automatically switching off the drive motor (2) which is switched on when the motor vehicle wheel (13) is clamped on to the centering cone or cones (15; 19) upon the attainment of such a torque that clamps the motor vehicle wheel on the main shaft sufficiently fast for carrying out the unbalance measuring run.

5. Apparatus according to claim 4 **characterised in that** to release the wheel (13) the main shaft (1) which is driven by the drive motor (2) has a direction of rotation in opposite relationship to the clamping action when the clamping nut (5) is fixed to prevent rotation thereof.

6. Apparatus according to claim 4 or claim 5 **characterised in that** a reference value store (9, 10) which is activated with the drive motor (2) being switched on, for a reference torque, is connected to a comparator (8) for comparison with the torque produced by the drive motor (2) against the clamping nut (5) when held fast.

7. Apparatus according to one of claims 4 to 6 **characterised in that** a timer (21) which predetermines a time interval within which the reference torque produced by the drive motor (2) against the clamping nut (5) when held fast is reached is connected to the switch (12) for automatically switching off the drive motor (2).

## Revendications

1. Procédé destiné à fixer de manière démontable une roue (13) de véhicule automobile sur un arbre principal (1) d'une machine d'équilibrage de roues, selon lequel un trou central prévu sur la roue et/ou des trous de goujons prévus sur la roue (13) sont serrés respectivement sur un ou plusieurs cônes de centrage (15 ; 19) disposés de manière définie par rapport à l'axe (20) de l'arbre principal, ou dégagés de ceux-ci, à l'aide d'un écrou de serrage (5) pouvant se déplacer dans la direction axiale sur l'arbre principal en y étant en prise par filetage,
**caractérisé en ce que** pour le déplacement axial de l'écrou de serrage (5), on fait tourner l'arbre principal (1) par l'entraînement du moteur (2), en immobilisant l'écrou de serrage (5) en rotation et
lorsque l'on atteint au cours de la phase de serrage, un couple engendré par l'entraînement du moteur à l'encontre de l'écrou de serrage (5) immobilisé tel que la roue de véhicule automobile est serrée suffisamment fort pour effectuer la mesure de balourd sur l'arbre principal, l'entraînement du moteur (2) est automatiquement arrêté.

2. Procédé selon la revendication 1, **caractérisé en ce que** l'entraînement du moteur (2) est arrêté lorsqu'à l'intérieur d'un intervalle de temps déterminé après la mise en marche de l'entraînement du moteur (2), le couple engendré par l'entraînement du moteur reste en-dessous d'un couple de consigne.

3. Procédé selon la revendication 1 ou 2, **caractérisé en ce que** le couple engendré par l'entraînement du moteur (2) à l'encontre de l'écrou de serrage (5) immobilisé, est comparé à un couple de consigne.

4. Dispositif destiné à fixer de manière démontable une roue (13) de véhicule automobile sur un arbre principal (1) d'une machine d'équilibrage, qui peut être entraîné par un moteur d'entraînement (2), et comprenant un ou plusieurs cônes de centrage (15 ; 19) disposés de manière définie par rapport à l'axe (20) de l'arbre principal et un écrou de serrage (5) mobile dans la direction axiale en étant en prise par filetage avec l'arbre principal (1), un trou central prévu sur la roue et/ou des trous de goujons prévus sur la roue (13) étant serrés sur le cône de centrage ou respectivement les cônes de centrage (15 ; 19) ou dégagés de celui-ci ou de ceux-ci,
**caractérisé en ce que** sur l'écrou de serrage (5) est prévu un système (6 ; 14) pour immobiliser l'écrou de serrage (5) en rotation, à la main ou par un dispositif de retenue (22) pouvant s'appuyer sur le châssis de la machine, et **en ce qu'**un dispositif de commutation (11, 12) du moteur d'entraînement (2) de l'arbre principal (1) est conçu de façon telle, et le moteur d'entraînement (2) est relié à l'arbre principal (1) de façon telle, que lors du serrage de la roue (13) du véhicule automobile, sur le cône de centrage ou les cônes de centrage (15 ; 19), le moteur d'entraînement (2) peut être mis en marche pour faire tourner l'arbre principal (1) et déplacer axialement l'écrou de serrage (5) immobilisé en rotation et le dispositif de commutation (11, 12) comprend un commutateur (12) destiné à arrêter automatiquement le moteur d'entraînement (2), qui est en marche lors du serrage de la roue (13) de véhicule automobile sur le cône de centrage ou les cônes de centrage (15 ; 19), lorsque l'on atteint un couple tel que la roue de véhicule automobile est serrée suffisamment fort pour effectuer la mesure de balourd sur l'arbre principal.

5. Dispositif selon la revendication 4, **caractérisé en ce que** pour desserrer la roue (13) l'arbre principal (1) entraîné par le moteur d'entraînement (2) présente un sens de rotation opposé à celui du serrage, pour un écrou de serrage (5) immobilisé en rotation.

6. Dispositif selon la revendication 4 ou 5, **caractérisé en ce qu'**une mémoire de valeur de consigne (9, 10) pour un couple de consigne, rendue active par la mise en marche du moteur d'entraînement (2), est reliée à un comparateur (8) en vue de la comparaison avec le couple engendré par le moteur d'entraînement (2) à l'encontre de l'écrou de serrage (5) maintenu immobilisé .

7. Dispositif selon l'une revendications 4 à 6, **caractérisé en ce qu'**une horloge (21) prescrivant un intervalle de temps durant lequel est atteint le couple de consigne engendré par le moteur d'entraînement (2) à l'encontre de l'écrou de serrage (5) maintenu immobilisé, est reliée au commutateur (12) pour arrêter automatiquement le moteur d'entraînement (2).
